**Europäisches Patentamt**

(19) **European Patent Office**

**Office européen des brevets**

(11) Numéro de publication: **0 001 145**

**B1**

(12) **FASCICULE DE BREVET EUROPEEN**

(21) Numéro de dépôt: 78200169.7

(22) Date de dépôt: 31.08.78

(51) Int. Cl.³: **B 01 D 53/34, C 01 B 7/07, C 01 B 31/20, C 25 B 1/26**

(54) Procédé de récupération sélective de chlore et d'anhydride carbonique d'un mélange gazeux

(30) Priorité: 05.09.77 FR 7727045

(43) Date de publication de la demande:
21.03.79 Bulletin 79/06

(45) Mention de la délivrance du brevet:
23.07.80 Bulletin 80/15

(84) Etats contractants désignés:
BE CH DE FR GB LU NL SE

(56) Documents cités:
DE - B - 1 113 683
FR - A - 2 264 772

(73) Titulaire: Solvay & Cie (Société Anonyme)
Rue du Prince Albert, 33
B - 1050 Bruxelles (BE)

(72) Inventeur: Ninane, Léon
Avenue de la Republique, 85
F - 39500 Tavaux (FR)
Bourgeois, Louis
Boulevard Louis Schmidt, 4
B - 1040 Bruxelles (BE)

(74) Mandataire: Eischen, Roland
Solvay & Cie, Dept. de la Propriété Industrielle
Rue de Ransbeek 310
B - 1120 Bruxelles (BE)

Courier Press, Leamington Spa, England.

Procédé de récupération sélective de chlore et d'anhydride
carbonique d'un mélange gazeux

La présente invention a pour objet un procédé de récupération sélective de chlore et d'anhydride carbonique de mélanges gazeux contenant du chlore et de l'anhydride carbonique.

On sait que le chlore obtenu par électrolyse des solutions aqueuses de chlorure de métal alcalin contient généralement, comme impuretés principales, de l'anhydride carbonique, de l'hydrogène, de l'oxygène, de l'azote et de l'eau. Sa liquéfaction s'accompagne de la formation d'un mélange gazeux résiduel, riche en anhydride carbonique et contenant encore un peu de chlore ainsi que de l'hydrogène et de l'air. Généralement, ce mélange gazeux résiduel contient encore une teneur trop élevée en chlore pour pouvoir être rejeté tel quèl dans l'atmosphère.

Divers procédés ont été proposés pour déchlorer les mélanges gazeux résiduels de la liquéfaction du chlore et permettre leur rejet dans l'atmosphère. Ces procédés connus impliquent notamment l'absorption du chlore dans de l'eau, une solution de tétrachlorure de carbone ou une solution d'hydroxyde de métal alcalin (Chlorine, its manufacture, properties and uses, J.S. Sconce, Rheinhold Publishing Corporation, 1962, page 124). On a aussi proposé de brûler le chlore du mélange gazeux résiduel en présence d'hydrogène, pour former de l'acide chlorhydrique que l'on stocke en vue d'une utilisation ultérieure, qui peut être l'acidification d'une saumure destinée aux cellules d'électrolyse (dito, p.133 et 138).

Dans la demande de brevet allemand 1 113 683 déposée le 10 avril 1953 au nom de melissant Kom.-Ges.für Industrieofenbau, Gastechnik und Gaschemie, on décrit un procédé pour déchlorer un mélange gazeux contenant du chlore, selon lequel on fait réagir le mélange gazeux à déchlorer avec des fumées chaudes contenant de l'hydrogène et provenant d'une combustion incomplète de gas d'éclairage de manière à convertir le chlore en chlorure d'hydrogène, puis on lave le gaz résultant de la réaction avec de l'eau pour y absorber le chlorure d'hydrogène.

Tous les procédés connus de déchloration des mélanges gazeux résiduels de la liquéfaction de chlore présentent toutefois le désavantage de ne pas permettre la récupération sélective et la valorisation de l'anhydride carbonique, qui est généralement présent en quantité importante dans ces mélanges.

L'invention remédie à cet inconvénient des procédés connus.

En conséquence, l'invention est relative à un procédé de récupératon sélective de chlore et d'anhydride carbonique d'un mélange gazeux contenant du chlore et de l'anhydride carbonique, selon lequel on soumet le mélange gazeux à une combustion en présence d'hydrogène, pour convertir le chlore en chlorure d'hydrogène, et on sépare le chlorure d'hydrogène par absorption dans une solution aqueuse; selon l'invention, on met en oeuvre une quantité suffisante d'hydrogène pour transformer la totalité du chlore en chlorure d'hydrogène et une solution aqueuse du métal alcalin en quantité suffisante pour absorber la totalité du chlorure d'hydrogène du gaz résultant de la combustion et on recueille le gaz résiduaire qui contient l'anhydride carbonique.

Dans le procédé suivant l'invention, les teneurs respectives en chlore et en anhydride carbonique du mélange gazeux à traiter ne sont pas critiques. Le mélange gazeux peut éventuellement contenir d'autres composants tels que de l'hydrogène, de l'oxygène, de l'azote et/ou de l'eau.

La quantité d'hydrogène utilisée doit être suffisante pour réagir avec la totalité du chlore et de l'oxygène du mélange gazeux, en formant du chlorure d'hydrogène et éventuellement de l'eau. En pratique, on utilise donc généralement un excès d'hydrogène par rapport à la quantité stoéchiométriquement nécessaire pour consommer la totalité du chlore et de l'oxygène éventuel, présents dans le mélange gazeux. En général, l'excès d'hydrogène ne dépasse pas 100% de la quantité stoéchiométrique.

L'hydrogène peut être utilisé sous la forme moléculaire non combinée. On peut aussi utiliser, en variante, de l'hydrogène sous forme d'hydrocarbures, de préférence non substitués. On utilise de préférence à cet effet des hydrocarbures gazeux à la pression atmosphérique et à la température ordinaire, notamment des hydrocarbures aliphatiques saturés tels que du méthane, de l'éthane, du propane ou du butane.

L'utilisation d'hydrocarbures est intéressante, lorsqu'on souhaite récupérer une quantité supplémentaire d'anhydride carbonique. Dans ce cas particulier, il peut être nécessaire d'admettre un complément d'oxygène pendant la combustion, pour convertir la totalité du carbone de l'hydrocarbure en anhydride carbonique.

La solution aqueuse de chlorure de métal alcalin a pour fonction d'absorber le chlorure d'hydrogène du gaz résultant de la combustion, de manière à libérer un gaz résiduaire exempt de chlorure d'hydrogène et contenant la totalité de l'anhydride carbonique présent dans le melange gazeux d'origine.

Le traitement du gaz de combustion avec la solution aqueuse peut être exécuté par tout moyen connu en soi, par exemple par circulation du gaz et de la solution à contre-courant dans une colonne d'absorption à empilage ou à plateaux.

Le débit de la solution aqueuse de chlorure de métal alcalin doit être suffisant pour absorber la totalité du chlorure d'hydrogène présent dans le gaz de combustion. Il dépend de divers facteurs, parmi lesquels on peut citer le débit de gaz à traiter sa teneur en chlorure d'hydrogène et les caractéristiques constructives de la colonne d'absorption.

Le gaz résiduaire recueilli après le traitement avec la solution aqueuse est exempt de chlorure d'hydrogène et de chlore, mais il contient sensiblement la totalité de l'anhydride carbonique qui était présente dans le mélange gazeux d'origine. Il peut être utilisé comme source d'anhydride carbonique dans divers procédés carbonatation. Il trouve notamment une application intéressante comme source d'anhydride carbonique dans le procédé de fabrication de la soude à l'ammoniaque.

Suivant l'invention, le gaz résiduaire du traitement du gaz de combustion avec la solution aqueuse de chlorure de métal alcalin, trouve une application particulièrement intéressante comme source d'anhydride carbonique pour la carbonatation des solutions aqueuses d'hydroxyde de sodium obtenues par électrolyse de saumures de chlorure de sodium en cellules à cathode de mercure, à diaphragme ou à membrane à perméabilité sélective. On peut avantageusement l'utiliser comme source d'anhydride carbonique dans les procédés de fabrication de carbonate de sodium décrits dans les demandes de brevets français 73.32710 du 11.9.1973, 76.04988 du 19.2.1976, 76.37565 du 9.12.1976 et 77.09256 du 25.3.1977, toutes au nom de la Demanderesse.

Dans le procédé suivant l'invention, la solution aqueuse de chlorure de métal alcalin recueillie après le traitement du gaz de combustion est acide. Suivant l'invention, cette solution acide trouve une application intéressante comme saumure d'alimentation des cellules d'electrolyse, en particulier des cellules à cathode de mercure, à diaphragme ou à membrane à perméabilité sélective pour la production de chlore.

L'invention présente l'avantage de fournir un procédé qui assure une déchloration efficace et économique des mélanges gazeux résiduels contenant du chlore et de l'anhydride carbonique, en permettant la valorisation du chlore et de l'anhydride carbonique contenus dans ces mélanges gazeux.

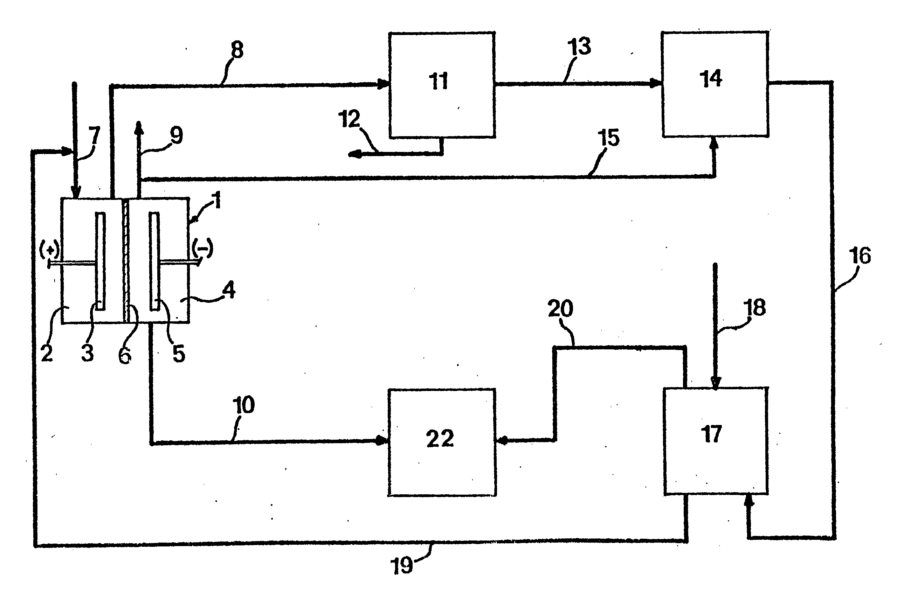

Des particularités et détails de l'invention ressortiront de la description suivante de la figure unique du dessin annexé qui représente, à titre d'exemple, le schéma d'une forme de réalisation du procédé suivant l'invention.

On a représenté en 1, sur la figure annexée, une cellule d'électrolyse pour la production de chlore. Elle comprend une chambre anodique 2 contenant une anode 3 et une chambre cathodique 4 contenant une cathode 5, séparées par un diaphragme perméable 6 en un matériau inerte, généralement en amiante.

Pendant l'électrolyse, on applique une différence de potentiel positive entre l'anode 3 et la cathode 5, on introduit de manière continue une saumure de chlorure de sodium 7 dans la chambre anodique et on extrait simultanément et en continu du chlore gazeux 8 hors de la chambre anodique 2 et de l'hydrogène 9 ainsi qu'une saumure caustique 10 hors de la chambre cathodique 4. Le fonctionnement d'une cellule d'électrolyse de ce type a été largement décrit dans la littérature technique (Chlorine, its manufacture, properties and uses, J.S. Sconce, Rheinhold Publishing Corporation, 1962, pages 81 à 126).

Le chlore gazeux 8 extrait de la chambre anodique 2 est ensuite traité dans une installation 11 connue en soi, où il est successivement refroidi, séché, puis liquéfié. On soutire de la sorte, de l'installation 11, d'une part du chlore à l'état liquide 12 et, d'autre part, un mélange gazeux résiduel 13 contenant les constituants non condensables du gaz 8 provenant de la cellule, ainsi qu'un peu de chlore. D'une manière générale, le mélange gazeux résiduel 13 contient principalement de l'anhydride carbonique, ainsi qu'un peu de chlore, d'hydrogène, d'oxygène, d'azote et d'eau.

Suivant l'invention, le mélange gazeux résiduel 13 est introduit dans une brûleur 14 simultanément avec un débit d'hydrogène 15 suffisant pour consommer la totalité du chlore et de l'oxygène du mélange gazeux 13 et former respectivement du chlorure d'hydrogène et de l'eau. L'hydrogène 15 peut par exemple être prélevé sur le courant d'hydrogène 9 extrait de la cellule d'électrolyse 1.

Le gaz de combustion 16 sortant du brûleur 14 est exempt de chlore et d'oxygène; il contient essentiellement du chlorure d'hydrogène, de l'anhydride carbonique, de l'hydrogène, de l'eau et de l'azote. Il est introduit à la base d'une colonne d'absorption à garnissage 17 où il circule à contre-courant d'une saumure de chlorure de sodium 18. Dans la colonne 17, la saumure 18 absorbe progressivement la totalité du chlorure d'hydrogène du gaz de combustion 16. On extrait, à la base de la colonne, une saumure acide 19 et, au sommet de la colonne, un gaz résiduaire 20 à teneur élevée en anhydride carbonique, mais exempt de chlore et de chlorure d'hydrogène. La saumure acide 19 est introduite dans la chambre anodique 2 de la cellule d'électrolyse 1, où elle permet ainsi de régler le pH de l'anolyte à une valeur optimum, par exemple comprise entre 2 et 4.

Le gaz résiduaire 20 à teneur élevée en anhydride carbonique est introduit comme source d'anhydride carbonique dans une soudière à l'ammoniaque 22 connue en soi, alimentée par la saumure caustique 10 extraite de la cellule d'électrolyse 1. Des soudières à l'ammoniaque de ce type et leur fonctionnement sont décrits notamment dans les brevets belges 621 370 du 13.8.1962 et 677 187 du 1.3.1966, au nom de la Demanderesse.

Le procédé suivant l'invention, schématisé à la figure du dessin annexé, permet ainsi de produire simultanément du chlore et du carbonate de sodium, sans rejeter un gaz résiduel chloré dans l'atmosphére.

Dans une forme de réalisation modifiée du procédé qui vient d'être décrit, on peut remplacer la soudière à l'ammoniaque 22 par une soudière sans ammoniaque, par exemple du type de celle décrite dans la demande de brevet français 77.09256 du 25.3.1977 au nom de la Demanderesse.

Dans une autre forme de réalisation modifiée, non représentée, du procédé qui vient d'être décrit, la cellule à diaphragme 1 est remplacée par une cellule à membrand à perméabilité sélective, ou par une installation d'électrolyse sur cathode de mercure. La lessive caustique produite par l'électrolyse est, dans ce cas particulier, exempte de chlorure de sodium. Elle est directement carbonatée moyen du gaz résiduaire 20, par exemple pour cristalliser du carbonate de sodium décahydryaté ou mono-hydraté suivant l'un ou l'autre des procédés décrits dans les demandes de brevets français 76.04988 du 19.2.1976, 76.37565 du 9.12.1976 et 77.09256 du 25.3.1977 au nom de la Demanderesse.

L'exemple d'application qui suit illustre le procédé schématisé à la figure.

Dans cet exemple, on a traité, en appliquant le procédé suivant l'invention, un mélange gazeux résiduel 13 de la liquéfaction du chlore, produit en un débit de 188,7 Nm³/h et présentant la composition suivante, exprimée en moles pour cent:

$$Cl_2 : 7\%$$
$$CO_2 : 20\%$$
$$H_2 : 3\%$$
$$air : 70\%$$

On a traité ce mélange gazeux résiduel 13 dans le brûleur 14, avec un débit horaire de 76,5 Nm³ d'hydrogène, de manière à convertir la totalité du chlore et de l'oxygène du mélange gazeux 13, en chlorure d'hydrogène et en vapeur d'eau. On a récupéré du brûleur 237,9 Nm³ de gaz de combustion par heure; celui-ci était à une température de 1935°C et présentait la composition suivante, exprimée en moles pour cent:

$$HCl : 11,1\%$$
$$CO_2 : 15,7\%$$
$$H_2 : 6,9\%$$
$$N_2 : 44,2\%$$
$$H_2O : 22,1\%$$

On a lavé ce gaz de combustion avec 108,3 m³/h d'une saumure saturée de chlorure de sodium à 25°C. Le lavage a eu pour résultat d'absorber la totalité du chlorure d'hydrogène du gaz de combustion dans la saumure et d'échauffer celle-ci de 1,25°C. On a de la sorte récupéré, d'une part une saumure acide, chaude (pH voisin de 2) et, d'autre part, un gaz résiduaire exempt de chlorure d'hydrogène et d'oxygène et contenant la totalité de l'anhydride carbonique du gaz traité.

Bien que la description qui précède ait été appliquée au traitement des mélanges gazeux résiduels de la liquéfaction du chlore produit par électrolyse, il est bien évident que l'invention s'applique aussi au traitement d'autres mélanges gazeux contenant à la fois du chlore et de l'anhydride carbonique. Elle trouve notamment une application pour extraire sélectivement le chlore et l'anhydride carbonique des mélanges gazeux résultant. des procédés d'obtention de chlorures métalliques · par chloration de minerais oxydés, tels que les procédés d'obtention de tétrachlorure de titane ou de zirconium décrits dans le traité "Chlorine, its manufacture, properties and uses", J.S. Sconce, Rheinhold Publishing Corporation,· 1962, pages 761 à 780.

**Revendications**

1. Procédé de récupération sélective de chlore et d'anhydride carbonique d'un mélange gazeux contenant du chlore et de l'anhydride carbonique, selon lequel on soumet le mélange gazeux (13) à une combustion en présence d'hydrogène (15), pour convertir le chlore en chlorure d'hydrogène et on sépare le chlorure d'hydrogène par absorption dans une solution aqueuse (18), caractérisé en ce qu'on met en oeuvre une quantité suffisante d'hydrogène (15) pour transformer la totalité du chlore en chlorure d'hydrogène, et une solution aqueuse de chlorure de métal alcalin (18) en quantité suffisante pour y absorber la totalité du chlorure d'hydrogène du gaz résultant de la combustion (16) et en ce qu'on recueille le gaz résiduaire (20) qui contient l'anhydride carbonique.

2. Procédé selon la revendication 1, caractérisé en ce que la solution aqueuse de chlorure de métal alcalin (18) est une saumure de chlorure de sodium.

3. Procédé selon la revendication 1 ou 2, caractérisé en ce qu'on électrolyse la solution aqueuse (19) dans laquelle on a absorbé le chlorure d'hydrogène.

4. Procédé selon l'une quelconque des revendications 1 à 3, caractérisé en ce qu'on traite le gaz résiduaire (20) avec une saumure ammoniacale pour y absorber l'anhydride carbonique qu'il contient.

5. Procédé selon l'une quelconque des revendications 1 à 3, caractérisé en ce qu'on traite le gaz résiduaire (20) avec une solution aqueuse d'hydroxyde de sodium (10) pour y absorber l'anhydride carbonique qu'il contient.

6. Procédé selon la revendication 5, caractérisé en ce que la solution aqueuse d'hydroxyde de sodium (10) est une saumure caustique.

7. Procédé selon l'une quelconque des revendications 1 à 6, caractérisé en ce que le mélange gazeux (13) est un mélange gazeux résiduel de la liquéfaction de chlore (8) produit par électrolyse d'une saumure de chlorure de métal alcalin (7).

8. Procédé selon l'une quelconque des revendications 1 à 7, caractérisé en ce que l'hydrogène est ajouté sous forme d'un hydrocarbure.

9. Procédé selon la revendication 8, caractérisé en ce que l'hydrocarbure est un hydrocarbure aliphatique saturé non substitué.

10. Procédé selon la revendication 8 ou 9, caractérisé en ce qu'on ajoute en outre au mélange gazeux soumis à la combustion, de l'oxygène en quantité suffisante pour convertir la totalité du carbone de l'hydrocarbure, en anhydride carbonique.

## Claims

1. Process for the selective recovery of chlorine and carbon dioxide from a gaseous mixture containing chlorine and carbon dioxide, according to which the gaseous mixture (13) is subjected to combustion in the presence of hydrogen (15), in order to convert the chlorine to hydrogen chloride, and the hydrogen chloride is separated off by absorption in an aqueous solution (18), characterised in that a sufficient amount of hydrogen (15) is employed to convert all the chlorine into hydrogen chloride, and a sufficient amount of an aqueous solution of an alkali metal chloride (18) is employed to absorb therein all of the hydrogen chloride present in the gas resulting from the combustion (16) and in that the residual gas (20), which contains the carbon dioxide, is collected.

2. Process according to Claim 1, characterised in that the aqueous solution of an alkali metal chloride (18) is a sodium chloride brine.

3. Process according to Claim 1 or 2, characterised in that the aqueous solution (19), in which the hydrogen chloride is absorbed, is electrolysed.

4. Process according to any one of Claims 1 to 3, characterised in that the residual gas (20) is treated with an ammoniacal brine in order to absorb therein the carbon dioxide present in the residual gas.

5. Process according to any one of Claims 1 to 3, characterised in that the residual gas (20) is treated with an aqueous sodium hydroxide solution (10) in order to absorb therein the carbon dioxide present in the residual gas.

6. Process according to Claim 5, characterised in that the aqueous sodium hydroxide solution (10) is a caustic brine.

7. Process according to any one of Claims 1 to 6, characterised in that the gaseous mixture (13) is a residual gaseous mixture from the liquefaction of chlorine (8) which has been produced by electrolysis of an alkali metal chloride brine (7).

8. Process according to any one of Claims 1 to 7, characterised in that hydrogen is added in the form of a hydrocarbon.

9. Process according to Claim 8, characterised in that the hydrocarbon is an unsubstituted saturated aliphatic hydrocarbon.

10. Process according to Claim 8 or 9, characterised in that furthermore oxygen, in an amount sufficient to convert all of the carbon of the hydrocarbon to carbon dioxide, is added to the gaseous mixture subjected to the combustion.

## Patentansprüche

1. Verfahren zur selektiven Gewinnung von Chlor und Kohlendioxid aus einem Chlor und Kohlendioxid enthaltenden Gasgemisch, wobei man das Gasgemisch (13) in Gengenwart von Wasserstoff (15) zur Überführung des Chlors in Chorwasserstoff verbrennt und den Chlorwasserstoff durch Absorption in einer wässrigen Lösung (18) abtrennt, dadurch gekennzeichnet, dass man eine zur Umwandlung des gesamten Chlors in Chlorwasserstoff ausreichende Menge an Wasserstoff (15) und eine zur Absorption des gesamten Chlorwasserstoffs des anfallenden Verbrennungsgases (16) ausreichende Menge wässriger Alkalimetallchloridlösung (18) einsetzt und das Restgas (20), das das Kohlendioxid enthält, auffängt.

2. Verfahren nach Anspruch 1, dadurch gekennzeichnet, dass die wässrige Alkali-metallchloridlösung (18) eine Natriumchlorid-sole ist.

3. Verfahren nach Anspruch 1 oder 2, dadurch gekennzeichnet, dass man die wässrige Lösung (19), in der der Chlorwasserstoff absorbiert ist, elektrolysiert.

4. Verfahren nach einem der Ansprüche 1 bis 3, dadurch gekennzeichnet, dass man das Restgas (20) mit einer ammoniakalischen Lösung zur Absorption des enthaltenen Kohlendioxids behandelt.

5. Verfahren nach einem der Ansprüche 1 bis 3, dadurch gekennzeichnet, dass man das Restgas (20) mit einer wässrigen Natriumhydroxidlösung (10) zur Absorption des enthaltenen Kohlendioxids behandelt.

6. Verfahren nach Anspruch 5, dadurch gekennzeichnet, dass die wässrige Natriumhydroxidlösung (10) eine Ätzlauge ist.

7. Verfahren nach einem der Ansprüche 1 bis 6, dadurch gekennzeichnet, dass das Gasgemisch (13) ein Restgasgemisch der Verflüssigung von durch Elektrolyse einer Alkalimetallchloridlösung (7) erzeugtem Chlor (8) ist.

8. Verfahren nach einem der Ansprüche 1 bis 7, dadurch gekennzeichnet, dass der Wasserstoff in Form eines Kohlenwasserstoffs zugesetzt wird.

9. Verfahren nach Anspruch 8, dadurch gekennzeichnet, dass der Kohlenwasserstoff ein gesättiger unsubstituierter aliphatischer Kohlenwasserstoff ist.

10. Verfahren nach Anspruch 8 oder 9, dadurch gekennzeichnet, dass man dem der Ver-

**0 001 145**

brennung unterworfenen Gasgemisch ausserdem Sauerstoff in zur Überführung des gesamten Kohlenstoffs des Kohlenwasserstoffs in Kohlendioxid ausreichender Menge zusetzt.